# EUROPEAN PATENT SPECIFICATION

(11) **EP 4 332 034 B1**
(45) Date of publication and mention of the grant of the patent: **12.02.2025**
(21) Application number: 23188016.2
(22) Date of filing: 27.07.2023
(51) Int. Cl.: B65H 27/00, D01D 13/02, B65H 23/00, H05F 3/04, B65H 75/02, H05F 3/00

(54) **YARN PROCESSING APPARATUS AND YARN PROCESSING SYSTEM**
GARNVERARBEITUNGSVORRICHTUNG UND GARNVERARBEITUNGSSYSTEM
APPAREIL DE TRAITEMENT DE FIL ET SYSTÈME DE TRAITEMENT DE FIL

(30) Priority: 22.08.2022 JP 2022131973
(43) Date of publication of application: 06.03.2024
(73) Proprietor: TMT Machinery, Inc., Osaka-shi, Osaka 541-0041 (JP)
(72) Inventor: YONEKURA, Tosei, Kyoto-shi, Kyoto, 612-8686 (JP); FUJII, Takaaki, Kyoto-shi, Kyoto, 612-8686 (JP); INOUE, Ryo, Kyoto-shi, Kyoto, 612-8686 (JP)
(74) Representative: Hoffmann Eitle

(56) References cited:
- EP-A1- 3 263 500
- CN-A- 111 498 569
- CN-U- 204 168 573
- CN-U- 209 982 800

## Description

### BACKGROUND OF THE INVENTION

The present invention relates to a yarn processing apparatus configured to process a yarn while conveying the yarn, and a yarn processing system including the yarn processing apparatus.

In a false-twist texturing machine of Patent Literature 1 (Japanese Unexamined Patent Publication No. 2018-3167), an antistatic unit for removing static electricity is provided for a rotational shaft supporting a drive roller forming a third feed roller. The antistatic unit includes a supporter and a static electricity removing member. The supporter is grounded directly or via a metal frame. The static electricity removing member is attached to the supporter, and provided along the rotational shaft. In Patent Literature 1, when static electricity is generated at the third feed roller as a yarn is conveyed, the static electricity is dissipated to the outside via the static electricity removing member and the grounded supporter.

Further relevant information can be found in documents CN 111 498 569 A, CN 209 982 800 U, CN 204 168 573 U and EP 3 263 500 A.

### SUMMARY OF THE INVENTION

In the above-described false-twist texturing machine of Patent Literature 1, the static electricity generated as the yarn is conveyed is just dissipated to the outside. That is, the static electricity is not effectively used.

An object of the present invention is to provide a yarn processing apparatus and a yarn processing system which make it possible to effectively use static electricity generated by conveying a yarn.

According to a first aspect of the invention, a yarn processing apparatus includes: at least one contact portion which is conductive and which is configured to make contact with at least one running yarn; at least one power storage device which includes a first terminal and a second terminal and which is able to be charged by a voltage applied between the first terminal and the second terminal; a voltage application circuit which is connected between the at least one contact portion and the at least one power storage device and which is configured to apply, by using a charge of static electricity generated because of friction between the at least one running yarn and the at least one contact portion, the voltage between the first terminal and the second terminal so that the first terminal is higher in electric potential than the second terminal, irrespective of the polarity of the static electricity; an electric device connected to the at least one power storage device; and a first switching unit which is connected between (i) any one of the first terminal and second terminal of the at least one power storage device and (ii) the electric device, and which is configured to switch connection of the at least one power storage device with the electric device and disconnection of the at least one power storage device from the electric device.

According to this aspect, when the connection between the at least one power storage device and the electric device is blocked by the first switching unit, the at least one power storage device is charged by using the charge of the static electricity generated at the at least one contact portion because of the friction between the at least one running yarn and the at least one contact portion. In this regard, the polarity of the static electricity generated at the at least one contact portion changes depending on, e.g., the type of the at least one yarn, the type of oil applied to the at least one yarn, and the degree to which the oil is applied to the at least one yarn. According to this aspect, the voltage application circuit is connected between the at least one contact portion and the at least one power storage device. With this arrangement, the voltage is applied between the first terminal and the second terminal so that the first terminal is higher in electric potential than the second terminal at the at least one power storage device irrespective of the polarity of the static electricity generated at the at least one contact portion. Because of this, the at least one power storage device is charged irrespective of the polarity of the static electricity generated at the at least one contact portion. It is therefore possible to efficiently charge the at least one power storage device. The charge of the static electricity generated at the at least one contact portion is used to charge the at least one power storage device. It is therefore possible to remove the static electricity generated at the at least one contact portion.

When the electric device needs to be driven, the first switching unit connects the at least one power storage device to the electric device while the at least one power storage device is charged. Because of this, the electric device is driven by electric charges stored in the at least one power storage device.

According to a second aspect of the invention, the yarn processing apparatus of the first aspect is arranged such that the voltage application circuit is a full-wave rectifier circuit.

The full-wave rectifier circuit is able to apply the voltage between the first terminal and the second terminal, so that the first terminal is higher in electric potential than the second terminal irrespective of the polarity of the static electricity generated at the at least one contact portion. Because of this, the at least one power storage device is charged irrespective of the polarity of the static electricity generated at the at least one contact portion. It is therefore possible to efficiently charge the at least one power storage device.

According to a third aspect of the invention, the yarn processing apparatus of the first or second aspect further includes, as the at least one contact portion, a stationary guide to which the at least one yarn is threaded and which is configured not to move in accordance with running of the at least one yarn.

The stationary guide is configured not to move in accordance with the running of the at least one yarn. With this arrangement, the stationary guide has high friction with the at least one running yarn so as to generate a large amount of the static electricity as compared to, e.g., a roller configured to move in accordance with the running of the at least one yarn. According to this aspect, the at least one power storage device is charged by using the charge of the static electricity generated at the stationary guide functioning as the at least one contact portion. It is therefore possible to efficiently charge the at least one power storage device. In this regard, because the at least one power storage device is charged, a large amount of the static electricity generated at the stationary guide is removed.

A surface of the stationary guide is gradually worn because of the friction with the at least one yarn, and thus an amount of electric charges of the static electricity generated at the stationary guide varies depending on the degree to which the surface of the stationary guide is worn. According to this aspect, the present invention makes it possible to detect the degree to which the stationary guide is worn, in accordance the variation of how much the at least one power storage device is charged. In this regard, the variation of how much the at least one power storage device is charged is caused by the variation of an amount of charges of the static electricity generated at the stationary guide.

According to a fourth aspect of the invention, the yarn processing apparatus of any one of the first to third aspects further includes a supplying roller configured to convey yarns as the at least one contact portion.

The supplying roller is configured to convey the yarns, and the static electricity is generated because of the friction between the supplying roller and each of the yarns. With this arrangement, a total amount of the static electricity generated at the supplying roller is large. According to this aspect, the at least one power storage device is charged by using the charge of the static electricity generated at the supplying roller functioning as the at least one contact portion. It is therefore possible to efficiently charge the at least one power storage device. In this regard, because the at least one power storage device is charged, a large amount of the static electricity generated at the supplying roller is removed.

The supplying roller is configured to convey the yarns while gripping the yarns. In the yarn processing apparatus, the tension of the running yarns may be adjusted by changing the rotation speed of the supplying roller. According to this aspect, the degree to which the yarns are gripped by the supplying roller, i.e., the degree to which the yarns slip on the supplying roller is detected based on how much the at least one power storage device is charged by the charge of the static electricity generated at the supplying roller.

According to a fifth aspect of the invention, the yarn processing apparatus of any one of the first to fourth aspects further includes a winding unit configured to form a package by winding the at least one running yarn onto a bobbin. Furthermore, the winding unit includes: a contact roller configured to make contact with the at least one yarn on a surface of the unfinished package, as the at least one contact portion; and a winding detection unit configured to detect the at least one yarn being wound onto the contact roller.

Typically, the running speed of the at least one yarn is high in the yarn processing apparatus (i.e., yarn winding system) configured to form the package by winding the at least one running yarn onto the bobbin. The friction between the at least one running yarn and the at least one contact portion is therefore high, and thus a large amount of the static electricity is generated at the at least one contact portion. According to this aspect, the at least one power storage device is charged by using the charge of the static electricity generated at the at least one contact portion of the yarn winding system in which the running speed of the at least one yarn is high. It is therefore possible to efficiently charge the at least one power storage device. In this regard, because the at least one power storage device is charged, a large amount of the static electricity generated at the at least one contact portion of the yarn winding system is removed.

The contact roller is configured to rotate while being in contact with the at least one yarn on a surface of the unfinished package. With this arrangement, a large amount of the static electricity is generated at the contact roller. According to this aspect, the at least one power storage device is charged by using the charge of the static electricity generated at the contact roller functioning as the at least one contact portion. This removes the static electricity generated at the contact roller.

The winding detection unit configured to detect the at least one yarn being wound onto the contact roller is provided in the vicinity of the contact roller. With this arrangement, when the static electricity is generated at the contact roller, electric discharge tends to occur between the contact roller and the winding detection unit. According to this aspect, the at least one power storage device is charged by using the charge of the static electricity generated at the contact roller functioning as the at least one contact portion. This removes the static electricity generated at the contact roller, and thus the electric discharge between the contact roller and the winding detection unit is suppressed.

According to a sixth aspect of the invention, the yarn processing apparatus of any one of the first to fifth aspects includes a winding unit configured to form a package by winding the at least one running yarn onto a bobbin. In this regard, the winding unit includes a traverse device configured to traverse the at least one yarn in an axial direction of the bobbin at the time of winding the at least one yarn onto the bobbin. Furthermore, the traverse device includes: a moving guide configured to reciprocate in the axial direction of the bobbin while holding the at least one yarn; and a fulcrum guide configured to support the at least one yarn on the upstream side of the moving guide in a running direction of the at least one yarn. In addition to that, the moving guide is the at least one contact portion.

The friction occurring between the moving guide of the traverse device and the at least one running yarn generates the static electricity. According to this aspect, the at least one power storage device is charged by using the charge of the static electricity generated at the moving guide functioning as the at least one contact portion. It is therefore possible to efficiently charge the at least one power storage device.

According to a seventh aspect of the invention, the yarn processing apparatus of any one of the first to sixth aspects includes a winding unit configured to form a package by winding the at least one running yarn onto a bobbin. In this regard, the winding unit includes a traverse device configured to traverse the at least one yarn in an axial direction of the bobbin at the time of winding the at least one yarn onto the bobbin, the traverse device includes: a moving guide configured to reciprocate in the axial direction of the bobbin while holding the at least one yarn; and a fulcrum guide configured to support the at least one yarn on the upstream side of the moving guide in a running direction of the at least one yarn, and the fulcrum guide is the at least one contact portion.

Because the fulcrum guide of the traverse device functions as a fulcrum at the time of the traverse of the at least one yarn, a bending angle of the at least one yarn at the fulcrum guide is larger than that at each of other fixed guides. With this arrangement, a large amount of the static electricity is generated. According to this aspect, the at least one power storage device is charged by using the charge of the static electricity generated at the fulcrum guide functioning as the at least one contact portion. It is therefore possible to efficiently charge the at least one power storage device.

Assume that plural yarns are wound by plural winding units. In this case, the traverse device is provided for each of the yarns. It is therefore possible to detect yarn breakage based on whether the at least one power storage device is charged by using the static electricity generated at the fulcrum guide (i.e., whether the static electricity is generated at the fulcrum guide).

According to an eighth aspect of the invention, the yarn processing apparatus of any one of the first to seventh aspects further includes an oil apply unit which is provided upstream of the at least one contact portion in the running direction of the at least one yarn and which is configured to apply oil to the at least one yarn.

The polarity of the static electricity generated at the at least one contact portion because of the friction between the at least one oiled yarn and the at least one contact portion may change depending on the type and brand of the oil, which is applied to the at least one yarn, and the changes in the surroundings such as humidity. According to this aspect, the voltage application circuit is connected between the at least one contact portion and the at least one power storage device. With this arrangement, the voltage is applied between the first terminal and the second terminal so that the first terminal is higher in electric potential than the second terminal at the at least one power storage device irrespective of the polarity of the static electricity generated at the at least one contact portion. Therefore, even when the polarity of the static electricity generated at the at least one contact portion changes because of uneven application of the oil to the at least one yarn, the at least one power storage device continues to be charged.

According to a ninth aspect of the invention, the yarn processing apparatus of any one of the first to eighth aspects further includes: a second switching unit configured to switch connection of the at least one contact portion with the voltage application circuit and grounding of the at least one contact portion; and a full charge detection unit configured to detect whether the at least one power storage device is fully charged. In this regard, when the full charge detection unit detects that the at least one power storage device is not fully charged, the second switching unit connects the at least one contact portion to the voltage application circuit. Meanwhile, when the full charge detection unit detects that the at least one power storage device is fully charged, the second switching unit grounds the at least one contact portion.

When the at least one power storage device is not fully charged, the at least one contact portion is connected to the voltage application circuit so that the at least one power storage device is charged by using the static electricity generated at the at least one contact portion. When the at least one power storage device is fully charged, the at least one contact portion is grounded so as to dissipate the static electricity generated at the at least one contact portion to the outside.

According to a tenth aspect of the invention, a yarn processing system includes at least one yarn processing apparatus and an electric device provided outside the at least one yarn processing apparatus, the at least one yarn processing apparatus including: at least one contact portion which is conductive and which is configured to make contact with a running yarn; at least one power storage device which includes a first terminal and a second terminal and which is able to be charged by the voltage applied between the first terminal and the second terminal; a voltage application circuit which is connected between the at least one contact portion and the at least one power storage device and which is configured to apply, by using a charge of static electricity generated because of friction between the running yarn and the at least one contact portion, the voltage between the first terminal and the second terminal so that the first terminal is higher in electric potential than the second terminal, irrespective of the polarity of the static electricity; and a switching unit which is connected between (i) any one of the first terminal and second terminal of the at least one power storage device and (ii) the electric device, and which is configured to switch connection of the at least one power storage device with the electric device and disconnection of the at least one power storage device from the electric device.

According to this aspect, when the connection between the at least one power storage device and the electric device is blocked by the switching unit, the at least one power storage device is charged by using the charge of the static electricity generated at the at least one contact portion because of the friction between the running yarn and the at least one contact portion. In this regard, the polarity of the static electricity generated at the at least one contact portion changes depending on, e.g., the type of the yarn, the type of the oil applied to the yarn, and the degree to which the oil is applied to the yarn. According to this aspect, the voltage application circuit is connected between the at least one contact portion and the at least one power storage device. With this arrangement, the voltage is applied between the first terminal and the second terminal so that the first terminal is higher in electric potential than the second terminal at the at least one power storage device irrespective of the polarity of the static electricity generated at the at least one contact portion. Because of this, the at least one power storage device is charged irrespective of the polarity of the static electricity generated at the at least one contact portion. It is therefore possible to efficiently charge the at least one power storage device. The charge of the static electricity generated at the at least one contact portion is used to charge the at least one power storage device. It is therefore possible to remove the static electricity generated at the at least one contact portion.

According to this aspect, when the electric device needs to be driven, the switching unit connects the at least one power storage device to the electric device provided outside the at least one yarn processing apparatus while the at least one power storage device is charged. Because of this, the electric device is driven by electric charges stored in the at least one power storage device.

According to an eleventh aspect of the invention, the yarn processing system of the tenth aspect includes yarn processing apparatuses; and the single electric device connected to the yarn processing apparatuses.

According to this aspect, the single electric device is driven by using electric charges stored in power storage devices of the yarn processing apparatuses. Therefore, even when an amount of electric charges stored in a power storage device of each of the yarn processing apparatuses is not large, the electric device is driven as long as a total amount of electric charges stored in the power storage devices of the yarn processing apparatuses is relatively large.

In the present invention, a power storage device is charged by using a charge of static electricity generated at a contact portion, irrespective of the polarity of the static electricity generated at the contact portion. It is therefore possible to remove the static electricity generated at the contact portion. When an electric device needs to be driven, the electric device is driven by electric charges stored in the power storage device.

### BRIEF DESCRIPTION OF THE DRAWINGS

FIG. 1 is a schematic diagram of a drawing unit of a spun yarn take-up winder of an embodiment of the present invention.
FIG. 2 is a schematic diagram of a take-up unit and winding unit of the spun yarn take-up winder of the embodiment of the present invention.
FIG. 3 shows a charging unit of the spun yarn take-up winder of the embodiment of the present invention.
FIG. 4(a) shows how a capacitor of the charging unit is charged when a positive charge of static electricity is generated at a contact portion, and FIG. 4(b) shows how the capacitor of the charging unit is charged when a negative charge of static electricity is generated at the contact portion.
FIG. 5(a) shows how static electricity generated at the contact portion is discharged to a grounded portion, and FIG. 5(b) shows how a device is driven by electric charges stored in the capacitor.
FIG. 6 shows a charging unit of a modification 1.
FIG. 7 shows a charging unit of a modification 2.
FIG. 8 shows a charging unit of a modification 3.
FIG. 9(a) shows how a capacitor of the charging unit is charged when a positive charge of static electricity is generated at a contact portion of the modification 3, and FIG. 9(b) shows how the capacitor of the charging unit is charged when a negative charge of static electricity is generated at the contact portion of the modification 3.
FIG. 10 shows a yarn processing system of a modification 4.

### DESCRIPTION OF THE PREFERRED EMBODIMENTS

The following will describe a preferred embodiment of the present invention.

### <Outline of Spun Yarn Take-Up Winder>

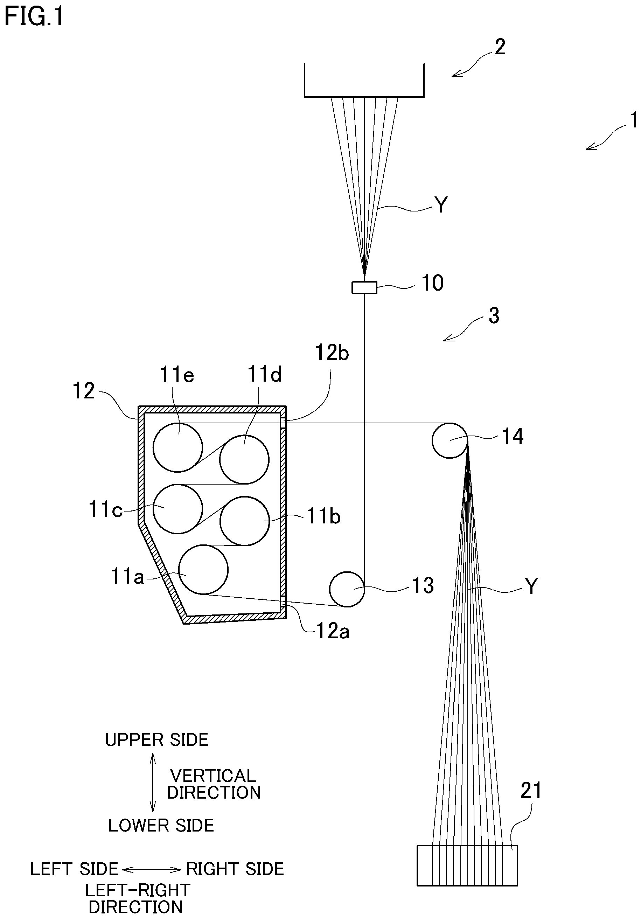

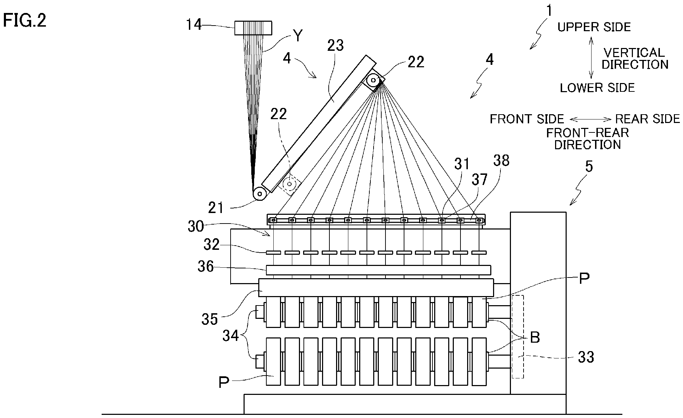

As shown in FIG. 1 and FIG. 2, a spun yarn take-up winder 1 of the present embodiment (i.e., a yarn processing apparatus of the present invention) includes a drawing unit 3, a take-up unit 4, and a winding unit 5. The take-up unit 4 and the winding unit 5 are provided below the drawing unit 3. The following description uses a vertical direction, a front-rear direction, and a left-right direction which are defined as shown in FIG. 1 and FIG. 2. The vertical direction is a direction in which the gravity acts. The front-rear direction, the left-right direction, and the vertical direction are orthogonal to one another. The following description also uses (i) the upper side and the lower side in the vertical direction, (ii) the right side and the left side in the left-right direction, and (iii) the front side and the rear side in the front-rear direction which are defined as shown in FIG. 1 and FIG. 2.

### <Drawing Unit>

As shown in FIG. 1, the drawing unit 3 is configured to draw yarns Y that are produced by continuously spinning a molten fibrous material such as polyester out from a spinning apparatus 2 provided above the drawing unit 3. The drawing unit 3 includes an oil supply guide 10 (i.e., an oil apply unit of the present invention) and five godet rollers 11a to 11e. The oil supply guide 10 is configured to apply oil to each of the yarns Y spun out from the spinning apparatus 2.

Each of the five godet rollers 11a to 11e has an axis parallel to the front-rear direction, and is rotationally driven by an unillustrated motor. Each of the five godet rollers 11a to 11e is made of a conductive material such as metal, and includes a heater therein. The five godet rollers 11a to 11e are housed in a thermal insulation box 12 which is rectangular parallelepiped in shape. In a right side wall member of the thermal insulation box 12, a yarn inlet 12a through which the yarns Y are introduced into the thermal insulation box 12 and a yarn outlet 12b through which the yarns Y go outside from the thermal insulation box 12 are formed.

The yarns Y to which oil is applied by the oil supply guide 10 are guided by a guide roller 13 and introduced into the thermal insulation box 12 through the yarn inlet 12a. The guide roller 13 has an axis parallel to the front-rear direction, and is made of a conductive material such as metal. The yarns Y introduced into the thermal insulation box 12 are wound onto the five godet rollers 11a to 11e in order.

The upstream three godet rollers 11a to 11c are heating rollers for preheating the yarns Y before drawing the yarns Y. The surface temperatures of the godet rollers 11a to 11c are arranged to be equal to or higher than a glass transition temperature of the yarns Y.

The downstream two godet rollers 11d and 11e are heating rollers for thermally setting the drawn yarns Y. The surface temperatures of the godet rollers 11d and 11e are arranged to be higher than those of the upstream three godet rollers 11a to 11c. The surface speeds of the downstream two godet rollers 11d and 11e are higher than those of the upstream three godet rollers 11a to 11c.

To begin with, the yarns Y introduced into the thermal insulation box 12 through the yarn inlet 12a are preheated to a drawable temperature, i.e., the glass transition temperature or more while being conveyed by the upstream three godet rollers 11a to 11c. Subsequently, the preheated yarns Y are drawn on account of the difference in surface speed between the godet rollers 11c and 11d. After that, the yarns Y are further heated while being conveyed by the downstream two godet rollers 11d and 11e. As a result, the drawn state is thermally set. The yarns Y which have been drawn in this way go outside from the thermal insulation box 12 through the yarn outlet 12b, and are then sent to the take-up unit 4 by a guide roller 14. The guide roller 14 has an axis parallel to the front-rear direction, and is made of a conductive material such as metal.

As shown in FIG. 2, the take-up unit 4 includes godet rollers 21 and 22.

The godet roller 21 has an axis parallel to the left-right direction, and is provided below the guide roller 14. The yarns Y sent to the take-up unit 4 by the guide roller 14 are taken up by the godet roller 21. The godet roller 21 is driven by an unillustrated motor.

The godet roller 22 has an axis parallel to the left-right direction, and is provided on the rear side of the godet roller 21 in the front-rear direction. The godet roller 22 is driven by an unillustrated motor. The take-up unit 4 further includes a guide rail 23 extending upward in the vertical direction toward the rear side in the front-rear direction. The godet roller 22 is connected to an unillustrated motor by an unillustrated pulley, belt, etc. As this motor is driven, the godet roller 22 moves along the guide rail 23. With this arrangement, the godet roller 22 is movable between (i) a rear position which is indicated by full lines in FIG. 2 and where winding of the yarns Y is performed and (ii) a front position which is indicated by one-dot chain lines in FIG. 2, which is closer to the godet roller 21 than the rear position, and where yarn threading is performed.

### <Winding Unit>

The winding unit 5 includes traverse devices 30, a turret 33, two bobbin holders 34, a contact roller 35, and a winding detection unit 36. The traverse devices 30 are provided for the respective yarns Y, and aligned in the front-rear direction. Each traverse device 30 includes a fulcrum guide 31 (i.e., a stationary guide of the present invention) and a traverse guide 32 (i.e., a moving guide of the present invention).

Each fulcrum guide 31 is made of a conductive material such as metal. The fulcrum guides 31 of the traverse devices 30 are attached to sliders 37. The sliders 37 are supported to be movable in the front-rear direction along a guide rail 38 extending in the front-rear direction. The sliders 37 are connected to an unillustrated cylinder. As this cylinder is driven, the sliders 37 move in the front-rear direction along the guide rail 38. With this arrangement, the fulcrum guides 31 are movable between (i) positions where the fulcrum guides 31 are separated from one another in the front-rear direction and where the winding of the yarns Y is performed and (ii) positions where the fulcrum guides 31 are gathered to the front side in the front-rear direction and where the yarn threading is performed.

Each traverse guide 32 is made of a conductive material such as metal, and provided downstream of a fulcrum guide 31 in a running direction of the yarns Y. The traverse guide 32 is driven by an unillustrated motor, and configured to reciprocate in the front-rear direction. With this arrangement, a yarn Y threaded to the traverse guide 32 is traversed about the fulcrum guide 31 provided upstream of the traverse guide 32 in the running direction of the yarns Y.

The turret 33 is a disc-shaped member having an axis parallel to the front-rear direction. The turret 33 is rotationally driven by an unillustrated motor. The two bobbin holders 34 have axes parallel to the front-rear direction and are rotatably supported at an upper end portion and a lower end portion of the turret 33, respectively. To each bobbin holder 34, bobbins B provided for the respective yarns Y are attached to be aligned in the front-rear direction. The two bobbin holders 34 are respectively driven by unillustrated motors.

As the upper bobbin holder 34 is rotationally driven, the yarns Y traversed by the traverse guides 32 are wound onto the bobbins B so as to form packages P. After the formation of the packages P is completed, the turret 33 is rotated so that the positions of the two bobbin holders 34 are changed upside down. As a result, the bobbin holder 34 having been at the lower position is moved to the upper position. This allows the yarns Y to be wound onto bobbins B attached to this bobbin holder 34, so as to form packages P. Meanwhile, the bobbin holder 34 having been at the upper position is accordingly moved to the lower position so that collection of packages P becomes possible.

The contact roller 35 has an axis parallel to the front-rear direction, and is made of a conductive material such as metal. The contact roller 35 is provided immediately above upper one of the bobbin holders 34. The contact roller 35 is configured to make contact with the yarns Y on surfaces of packages P formed by winding the yarns Y onto bobbins B attached to upper one of the bobbin holders 34, so as to apply a contact pressure to the surfaces of the unfinished packages P.

The winding detection unit 36 is provided immediately above the contact roller 35. The winding detection unit 36 is configured to detect the yarns Y being wound onto the contact roller 35.

### <Structure of Charging Unit>

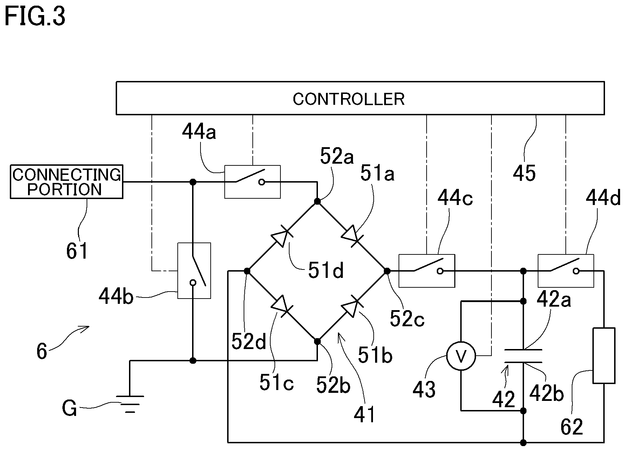

The spun yarn take-up winder 1 of the present embodiment further includes a charging unit 6 shown in FIG. 3. The charging unit 6 includes a full-wave rectifier circuit 41 (i.e., a voltage application circuit of the present invention), a capacitor 42 (a power storage device of the present invention), a voltage detection circuit 43 (a full charge detection unit of the present invention), switches 44a to 44d, and a controller 45. In the present embodiment, the switch 44d is equivalent to a first switching unit of the present invention, and a combination of the switches 44a to 44c and the controller 45 is equivalent to a second switching unit of the present invention.

In advance of the description of details of the charging unit 6, the following describes a contact portion 61 shown in FIG. 3. In the spun yarn take-up winder 1, the contact portion 61 is conductive and configured to make contact with the running yarns Y. To be more specific, for example, the contact portion 61 is formed of one of the godet rollers 11a to 11e, one of the guide rollers 13 and 14, one of the godet rollers 21 and 22, the contact roller 35, one of the fulcrum guides 31, or one of the traverse guides 32. The friction between the running yarns Y and the contact portion 61 generates static electricity at the contact portion 61.

The full-wave rectifier circuit 41 includes four diodes 51a to 51d. A cathode of the diode 51a is connected to a cathode of the diode 51b. An anode of the diode 51b is connected to a cathode of the diode 51c. An anode of the diode 51c is connected to an anode of the diode 51d. A cathode of the diode 51d is connected to an anode of the diode 51a.

A connecting portion 52a between the cathode of the diode 51d and the anode of the diode 51a is connected to the contact portion 61. The switch 44a is connected between the connecting portion 52a and the contact portion 61. The switch 44a is configured to be switched between the ON state and the OFF state under the control of the controller 45. When the switch 44a is turned on, the connecting portion 52a is connected to the contact portion 61. When the switch 44a is turned off, the connection between the connecting portion 52a and the contact portion 61 is blocked.

A connecting portion 52b between the anode of the diode 51b and the cathode of the diode 51c is connected to a grounded portion G so as to be grounded. The contact portion 61 is connected to the grounded portion G via the switch 44b. The switch 44b is configured to be switched between the ON state and the OFF state under the control of the controller 45. When the switch 44b is turned on, the contact portion 61 is connected to the grounded portion G so as to be grounded. When the switch 44b is turned off, the connection between the contact portion 61 and the grounded portion G is blocked.

The capacitor 42 is connected between (i) a connecting portion 52c between the cathode of the diode 51a and the cathode of the diode 51b and (ii) a connecting portion 52d between the anode of the diode 51c and the anode of the diode 51d. The capacitor 42 includes a first terminal 42a connected to the connecting portion 52c and a second terminal 42b connected to the connecting portion 52d. The switch 44c is connected between the connecting portion 52c and the first terminal 42a of the capacitor 42. The switch 44c is configured to be switched between the ON state and the OFF state under the control of the controller 45. When the switch 44c is turned on, the connecting portion 52c is connected to the first terminal 42a of the capacitor 42. When the switch 44c is turned off, the connection between the connecting portion 52c and the first terminal 42a of the capacitor 42 is blocked.

The first terminal 42a and second terminal 42b of the capacitor 42 are connected to an electric device 62. For example, the electric device 62 is a tension sensor of yarns, a sensor configured to detect an amount of static electricity generated at the contact portion 61, a temperature sensor of a bearing, or the like. The switch 44d is connected between the first terminal 42a and the electric device 62. The switch 44d is configured to be switched between the ON state and the OFF state under the control of the controller 45. When the switch 44d is turned on, the first terminal 42a of the capacitor 42 is connected to the electric device 62. When the switch 44d is turned off, the connection between the first terminal 42a of the capacitor 42 and the electric device 62 is blocked.

The voltage detection circuit 43 is connected between the first terminal 42a and second terminal 42b of the capacitor 42. The voltage detection circuit 43 is configured to output, to the controller 45, a signal indicating the voltage between the first terminal 42a and the second terminal 42b. When the voltage indicated by a signal output from the voltage detection circuit 43 is not less than a predetermined voltage, the controller 45 receives this signal as a signal indicating the full charge of the capacitor 42. When the voltage indicated by a signal output from the voltage detection circuit 43 is less than a predetermined voltage, the controller 45 receives this signal as a signal indicating that the capacitor 42 is not fully charged.

The following describes the connection between the contact portion 61 and each part of the charging unit 6. When the contact portion 61 is formed of one fulcrum guide 31, this fulcrum guide 31 is connected to the charging unit 6 through, e.g., a wire. When the contact portion 61 is formed of one traverse guide 32, this traverse guide 32 is connected to the charging unit 6 by, e.g., a connecting member supporting this traverse guide 32 to the charging unit 6 through a wire. When the contact portion 61 is formed of one of the godet rollers 11a to 11e, one of the guide rollers 13 and 14, one of the godet rollers 21 and 22, or the contact roller 35, this roller (the contact portion 61) is connected to the charging unit 6 by, e.g., being made contact with an anti-static brush connected to the charging unit 6. Alternatively, when the contact portion 61 is formed of one of the above-described rollers, this roller (the contact portion 61) may be arranged to be separated from and to oppose an electrode connected to the charging unit 6 so that electric discharge from the roller to the electrode can occur. The roller is electrically connected to the charging unit 6 also in this case.

### <Operation of Charging Unit>

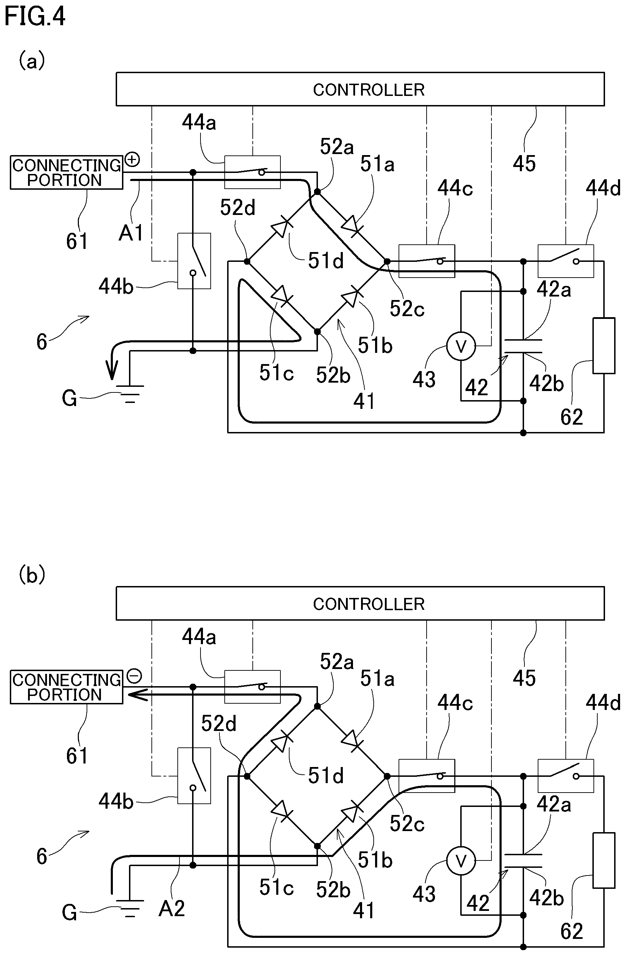

The following will describe an operation of the charging unit 6. When the voltage indicated by a signal output from the voltage detection circuit 43 is less than a predetermined voltage (i.e., when the capacitor 42 is not fully charged) in the charging unit 6, the controller 45 turns on the switches 44a and 44c and turns off the switches 44b and 44d as shown in FIGs. 4(a) and 4(b). Because of this, a charge of static electricity generated at the contact portion 61 is used to charge the capacitor 42, and thus the static electricity generated at the contact portion 61 is removed.

To be more specific, when a positive charge of static electricity is generated at the contact portion 61, a current flows along a path (i.e., path indicated by an arrow A1 in FIG. 4(a)) passing trough the contact portion 61, the switch 44a, the connecting portion 52a, the diode 51a, the connecting portion 52c, the switch 44c, the capacitor 42, the connecting portion 52d, the diode 51c, the connecting portion 52b, and the grounded portion G in this order as shown in FIG. 4(a). Because of this, electric charges generated at the contact portion 61 are used to charge the capacitor 42, and thus the static electricity generated at the contact portion 61 is removed.

When a negative charge of static electricity is generated at the contact portion 61, a current flows along a path (i.e., path indicated by an arrow A2 in FIG. 4(b)) passing trough the grounded portion G, the connecting portion 52b, the diode 51b, the connecting portion 52c, the switch 44c, the capacitor 42, the connecting portion 52d, the diode 51d, the connecting portion 52a, the switch 44a, and the contact portion 61 in this order as shown in FIG. 4 (b). Because of this, electric charges generated at the contact portion 61 are used to charge the capacitor 42, and thus the static electricity generated at the contact portion 61 is removed.

When either a positive charge or a negative charge of static electricity is generated at the contact portion 61 as described above, the first terminal 42a is higher in electric potential than the second terminal 42b in the capacitor 42. As a result that, the capacitor 42 is charged.

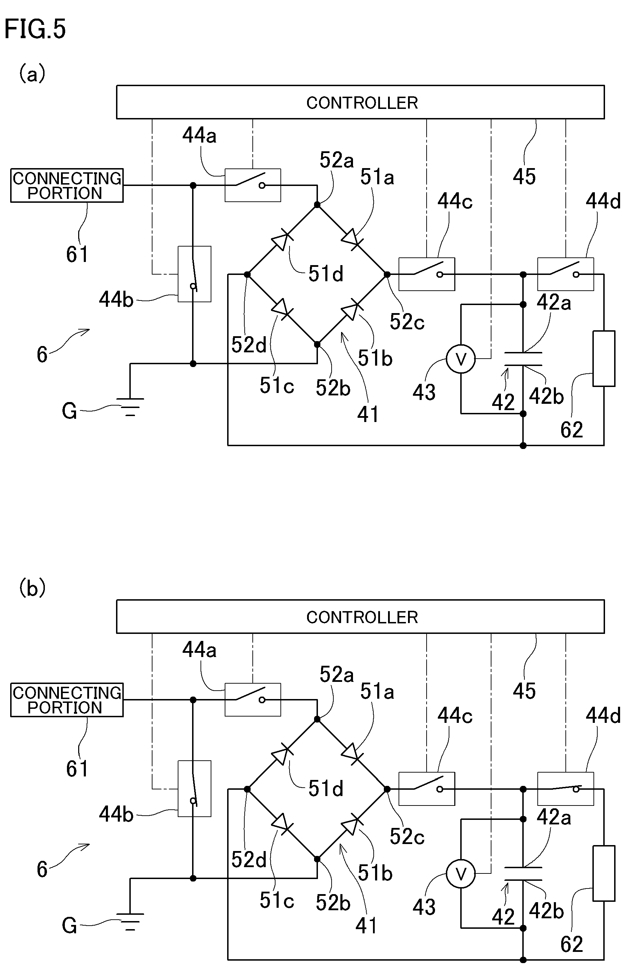

When the voltage indicated by a signal output from the voltage detection circuit 43 is not less than a predetermined voltage (i.e., when the capacitor 42 is fully charged) in the charging unit 6, the controller 45 turns on the switch 44b and turns off the switches 44a, 44c, and 44d as shown in FIG. 5(a). Because of this, the contact portion 61 is connected to the grounded portion G so as to be grounded, and thus static electricity generated at the contact portion 61 is removed.

When the electric device 62 is driven in the charging unit 6, the controller 45 turns on the switches 44b and 44d and turns off the switches 44a and 44c as shown in FIG. 5(b). Because of this, the capacitor 42 is connected to the electric device 62, and the electric device 62 is driven by electric charges stored in the capacitor 42. As such, the present embodiment makes it possible to drive the electric device 62 by using electric charges stored in the capacitor 42. It is therefore unnecessary to connect the electric device 62 to a power source of the spun yarn take-up winder 1, and thus the electric device 62 is easily attached and driven according to need. Because the switch 44b is turned on when the electric device 62 is driven by using electric charges stored in the capacitor 42, the contact portion 61 is connected to the grounded portion G so as to be grounded. With this arrangement, while the electric device 62 is driven, a charge of static electricity is avoided from continuing to be stored in the contact portion 61. In this regard, when (i) the electric device 62 is driven in a short time and (ii) a charge of static electricity stored in the contact portion 61 while the electric device 62 is driven is not so large, the switch 44b may be turned off.

### <Effects>

In the present embodiment, when the switch 44d is turned off, the capacitor 42 is charged by using a charge of static electricity generated at the contact portion 61 because of the friction between the running yarns Y and the contact portion 61. In this regard, the polarity of static electricity generated at the contact portion 61 because of the friction between the oiled yarns Y and the contact portion 61 changes depending on, e.g., the type of the yarns Y, the type and brand of oil applied to the yarns Y, and changes in the surroundings such as humidity. In the present embodiment, the full-wave rectifier circuit 41 is connected between the contact portion 61 and the capacitor 42. With this arrangement, when the voltage is applied between the first terminal 42a and the second terminal 42b by using a charge of static electricity generated at the contact portion 61, the first terminal 42a is higher in electric potential than the second terminal 42b at the capacitor 42 irrespective of the polarity of the static electricity generated at the contact portion 61. Because of this, the capacitor 42 is charged irrespective of the polarity of static electricity generated at the contact portion 61. It is therefore possible to efficiently charge the capacitor 42. Furthermore, a charge of static electricity generated at the contact portion 61 is used to charge the capacitor 42. It is therefore possible to remove the static electricity generated at the contact portion 61.

When the electric device 62 needs to be driven, the switch 44d is turned on so as to connect the first terminal 42a of the capacitor 42 to the electric device 62, with the capacitor 42 charged. As a result, the electric device 62 is driven by electric charges stored in the capacitor 42.

Typically, the running speed of the yarns Y is high in the spun yarn take-up winder 1 configured to form the packages P by winding the running yarns Y onto the bobbins B. The friction between the running yarns Y and the contact portion 61 is therefore high, and thus a large amount of static electricity is generated at the contact portion 61. In the present embodiment, the capacitor 42 is charged by using a charge of static electricity generated at the contact portion 61 of the spun yarn take-up winder 1 in which the running speed of the yarns Y is high. It is therefore possible to efficiently charge the capacitor 42. In this regard, because the capacitor 42 is charged, a large amount of static electricity generated at the contact portion 61 is removed.

The godet rollers 11a to 11e, the guide rollers 13 and 14, and the godet rollers 21 and 22 are configured to convey the yarns Y, and each of the yarns Y causes friction with each of these rollers so as to generate static electricity. With this arrangement, a total amount of the generated static electricity is large. Therefore, when (i) the contact portion 61 is formed of one of these rollers and (ii) the capacitor 42 is charged by using a charge of static electricity generated at this roller (the contact portion 61), the capacitor 42 is efficiently charged. In this regard, because the capacitor 42 is charged, a large amount of static electricity generated at the roller is removed.

The godet rollers 11a to 11e, the guide rollers 13 and 14, and the godet rollers 21 and 22 are configured to convey the yarns Y while gripping the yarns Y. The tension of the running yarns Y may be adjusted by adjusting the rotation speed of one of these rollers. In this regard, the present embodiment makes it possible to detect the degree to which the yarns Y are gripped by this roller, i.e., the degree to which the yarns Y slip on this roller based on how much the capacitor 42 is charged by a charge of static electricity generated at this roller.

The contact roller 35 is configured to rotate while being in contact with each yarn Y on the surface of an unfinished package P. With this arrangement, static electricity is generated at the contact roller 35. In the present embodiment, the contact roller 35 is configured to rotate while being in contact with the yarns Y on the surfaces of the packages P, and thus a total amount of generated static electricity is large. Therefore, when (i) the contact portion 61 is formed of the contact roller 35 and (ii) the capacitor 42 is charged by using a charge of static electricity generated at the contact roller 35, the capacitor 42 is efficiently charged. In this regard, because the capacitor 42 is charged, static electricity generated at the contact roller 35 is removed.

The winding detection unit 36 configured to detect the yarns Y being wound onto the contact roller 35 is provided in the vicinity of the contact roller 35. With this arrangement, when static electricity is generated at the contact roller 35, electric discharge tends to occur between the contact roller 35 and the winding detection unit 36. Therefore, when (i) the contact portion 61 is formed of the contact roller 35 and (ii) the capacitor 42 is charged by using a charge of static electricity generated at the contact roller 35, the electric discharge between the contact roller 35 and the winding detection unit 36 is suppressed by removing the static electricity generated at the contact roller 35.

The friction occurring between the traverse guides 32 of the traverse devices 30 and the running yarns Y generates static electricity. Therefore, when (i) the contact portion 61 is formed of one traverse guide 32 and (ii) the capacitor 42 is charged by using a charge of static electricity generated at this traverse guide 32, the static electricity generated at this traverse guide 32 is removed.

The friction occurring between the fulcrum guides 31 of the traverse devices 30 and the running yarns Y generates static electricity. In this regard, because the fulcrum guides 31 function as fulcrums at the time of the traverse of yarns Y, a bending angle of a yarn Y at each fulcrum guide 31 is larger than that at each of other fixed guides. With this arrangement, a large amount of static electricity is generated. Therefore, when (i) the contact portion 61 is formed of one fulcrum guide 31 and (ii) the capacitor 42 is charged by using a charge of static electricity generated at this fulcrum guide 31, a large amount of static electricity generated at this fulcrum guide 31 is removed and the capacitor 42 is efficiently charged. In the present embodiment, the fulcrum guides 31 are provided for the respective yarns Y. It is therefore possible to detect yarn breakage based on whether the capacitor 42 is charged by using static electricity generated at the fulcrum guides 31 (i.e., whether static electricity is generated at the fulcrum guides 31).

The fulcrum guides 31 are configured not to move in accordance with running of the yarns Y. With this arrangement, the fulcrum guides 31 have high friction with the running yarns Y so as to generate a large amount of static electricity as compared to the godet rollers 11a to 11e, the guide rollers 13 and 14, the godet rollers 21 and 22, and the contact roller 35 all of which are configured to rotate in accordance with the running of the yarns Y. With this arrangement, when (i) the contact portion 61 is formed of one fulcrum guide 31 and (ii) the capacitor 42 is charged by using a charge of static electricity generated at this fulcrum guide 31, the capacitor 42 is efficiently charged. In this regard, because the capacitor 42 is charged, a large amount of static electricity generated at the fulcrum guides 31 is removed.

In the present embodiment, also when the contact portion 61 is formed of one of the godet rollers 11a to 11e, one of the guide rollers 13 and 14, one of the godet rollers 21 and 22, the contact roller 35, one of the fulcrum guides 31, or one of the traverse guides 32, the oil supply guide 10 is provided upstream of the contact portion 61 in the running direction of the yarns Y. The polarity of static electricity generated at the contact portion 61 because of the friction between the oiled yarns Y and the contact portion 61 may change depending on the type and brand of oil, which is applied to the yarns Y in the oil supply guide 10, and the changes in the surroundings such as humidity. In the present embodiment, the full-wave rectifier circuit 41 is connected between the contact portion 61 and the capacitor 42. With this arrangement, when the voltage is applied between the first terminal 42a and second terminal 42b of the capacitor 42 by a charge of static electricity generated at the contact portion 61, the first terminal 42a is higher in electric potential than the second terminal 42b irrespective of the polarity of the static electricity generated at the contact portion 61. Therefore, even when the polarity of static electricity generated at the contact portion 61 changes because of uneven application of oil to the yarns Y, the capacitor 42 continues to be charged.

In the present embodiment, when the capacitor 42 is not fully charged, the contact portion 61 is connected to the full-wave rectifier circuit 41 so that the capacitor 42 is charged by using a charge of static electricity generated at the contact portion 61. Meanwhile, when the capacitor 42 is fully charged, the contact portion 61 is grounded so as to dissipate static electricity generated at the contact portion 61 to the outside.

A preferred embodiment of the present invention has been described. It should be noted that the present invention is not limited to the above-described embodiment, and various changes, substitutions, and alterations can be made herein without departing from the spirit and scope of the invention as defined by the appended claims.

For example, the single capacitor 42 is charged by using a charge of static electricity generated at the single contact portion 61 in the embodiment above. However, the disclosure is not limited to this.

For example, (i) two or more contact portions 61 each of which is formed of one of the godet rollers 11a to 11e, one of the guide rollers 13 and 14, one of the godet rollers 21 and 22, the contact roller 35, one of the fulcrum guides 31, and one of the traverse guides 32 may be provided and (ii) the charging unit 6 of the embodiment above may be provided for each contact portion 61.

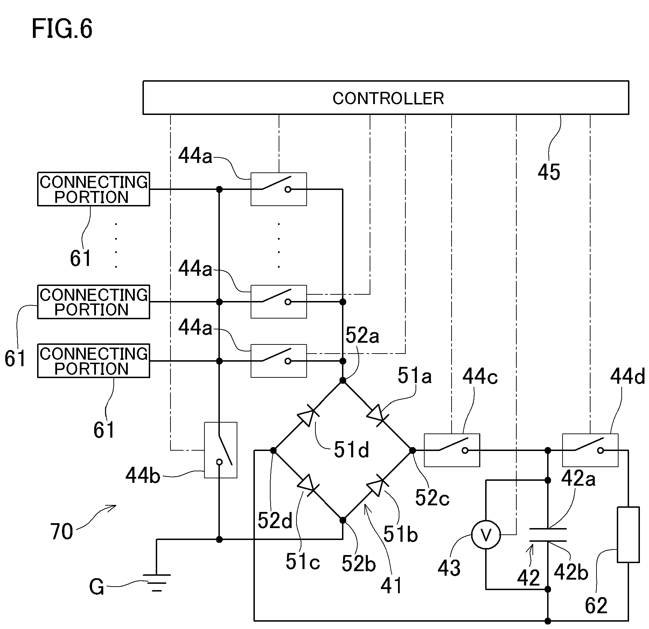

When plural contact portions 61 are provided, the charging unit 6 may not be provided for each contact portion 61. In a charging unit 70 of a modification 1, plural contact portions 61 are connected to the connecting portion 52a in a parallel manner as shown in FIG. 6. Each contact portion 61 is formed of one of the godet rollers 11a to 11e, one of the guide rollers 13 and 14, one of the godet rollers 21 and 22, the contact roller 35, one of the fulcrum guides 31, or one of the traverse guides 32. A switch 44a is connected between the connecting portion 52a and each contact portion 61.

In the modification 1, when the voltage indicated by a signal output from the voltage detection circuit 43 is less than a predetermined voltage, the controller 45 turns on one of the switches 44a and the switch 44c and turns off the remaining switches 44a, the switch 44b, and the switch 44d. In this regard, for example, the controller 45 is programmed to select one of the switches 44a to be turned on at predetermined intervals.

In the modification 1, the capacitor 42 is charged by using a charge of static electricity generated at the contact portions 61. This removes the static electricity generated at the contact portions 61.

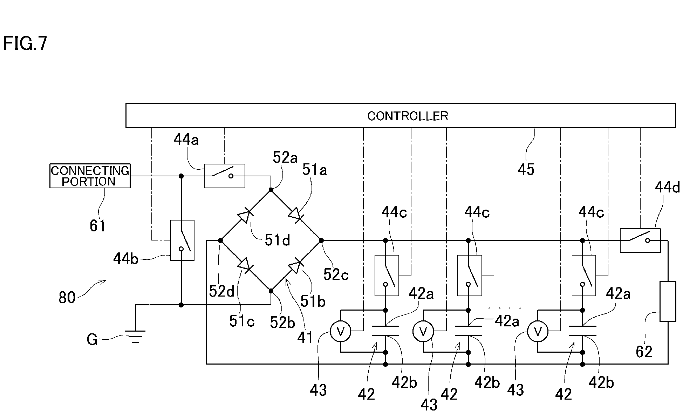

In a charging unit 80 of a modification 2, plural capacitors 42 are connected between the connecting portion 52c and the connecting portion 52d in a parallel manner as shown in FIG. 7. A switch 44c is connected between the connecting portion 52c and a first terminal 42a of each capacitor 42. A voltage detection circuit 43 is connected between the first terminal 42a and second terminal 42b of each capacitor 42.

In the modification 2, when each of one or more voltage detection circuits 43 outputs a signal indicating the voltage that is less than a predetermined voltage (i.e., when one or more capacitors 42 are not fully charged), the controller 45 turns on the switch 44a and one of one or more switches 44c corresponding to the one or more voltage detection circuits 43 and turns off the switch 44b, the switch 44d, and the remaining switches 44c. In this regard, when (i) one of the one or more switches 44c is turned on and then (ii) the voltage indicated by a signal output from a voltage detection circuit 43 corresponding to this switch 44c becomes equal to or higher than a predetermined voltage (i.e., a capacitor 42 corresponding to this switch 44c is fully charged), this switch 44c is turned off. Subsequently, when the voltage indicated by a signal output from another voltage detection circuit 43 is less than a predetermined voltage (i.e., when another capacitor 42 is not fully charged), a switch 44c corresponding to the another voltage detection circuit 43 is turned on.

Meanwhile, when all voltage detection circuits 43 output signals each of which indicates the voltage that is not less than a predetermined voltage (i.e., when all capacitors 42 are fully charged), the switch 44a, the switch 44d, and all switches 44c are turned off and the switch 44b is turned on. In the modification 2, the electric device 62 is driven with use of electric charges stored in a capacitor 42 corresponding to one of the switches 44c by turning on the one of the switches 44c, the switch 44b, and the switch 44d and turning off the switch 44a and the remaining switches 44c.

In the modification 2, the capacitors 42 are charged by using a charge of static electricity generated at the contact portion 61. The electric device 62 is driven by electric charges stored in the capacitors 42.

In regard to the charging unit of the present invention, (i) plural contact portions 61 and plural switches 44a may be provided in the same manner as in the modification 1 and (ii) plural capacitors 42, plural switches 44c, and plural voltage detection circuits 43 may be provided in the same manner as in the modification 2. In this case, the capacitors 42 are charged by using electric charges generated at the contact portions 61, and the electric device 62 is driven by the electric charges stored in the capacitors 42.

In the embodiment above, the full-wave rectifier circuit 41 is connected between the contact portion 61 and the capacitor 42. With this arrangement, the voltage is applied between the first terminal 42a and the second terminal 42b by a charge of static electricity generated at the contact portion 61, so that the first terminal 42a is higher in electric potential than the second terminal 42b irrespective of the polarity of the static electricity. However, the disclosure is not limited to this. A voltage application circuit different from the full-wave rectifier circuit 41 may be connected between the contact portion 61 and the capacitor 42 and, with this arrangement, the voltage may be applied between the first terminal 42a and the second terminal 42b by a charge of static electricity generated at the contact portion 61 so that the first terminal 42 is higher in electric potential than the second terminal 42b irrespective of the polarity of static electricity.

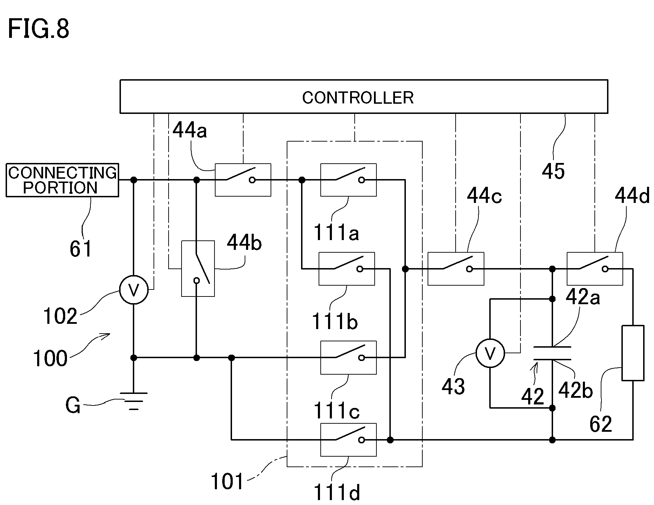

For example, as shown in FIG. 8, a charging unit 100 of a modification 3 includes a voltage application circuit 101 instead of the full-wave rectifier circuit 41 used in the charging unit 6 of the embodiment above. The charging unit 100 further includes a voltage detection circuit 102.

The voltage application circuit 101 includes four switches 111a to 111d. The switch 111a is connected between a terminal of the switch 44a and a terminal of the switch 44c. The terminal of the switch 44a is opposite to the contact portion 61, and the terminal of the switch 44c is opposite to the capacitor 42. The switch 111b is connected between the terminal of the switch 44a and the second terminal 42b of the capacitor 42. In this regard, the terminal of the switch 44a is opposite to the contact portion 61. The switch 111c is connected between a terminal of the switch 44c and the grounded portion G. The terminal of the switch 44c is opposite to the capacitor 42. The switch 111d is connected between the second terminal 42b of the capacitor 42 and the grounded portion G. The switches 111a to 111d are configured to be switched between the ON state and the OFF state by the controller 45. In the modification 3, the switch 44d is equivalent to the first switching unit of the present invention, and a combination of the switches 44a to 44c, the switches 111a to 111d, and the controller 45 is equivalent to the second switching unit of the present invention.

The voltage detection circuit 102 is connected between the contact portion 61 and the grounded portion G and configured to output, to the controller 45, a signal indicating the electric potential of the contact portion 61 with reference to the electric potential of the grounded portion G (i.e., ground potential). When a positive charge of static electricity is generated at the contact portion 61, a signal output from the voltage detection circuit 102 indicates a positive electric potential that is higher than the ground potential. When a negative charge of static electricity is generated at the contact portion 61, a signal output from the voltage detection circuit 102 indicates a negative electric potential that is lower than the ground potential.

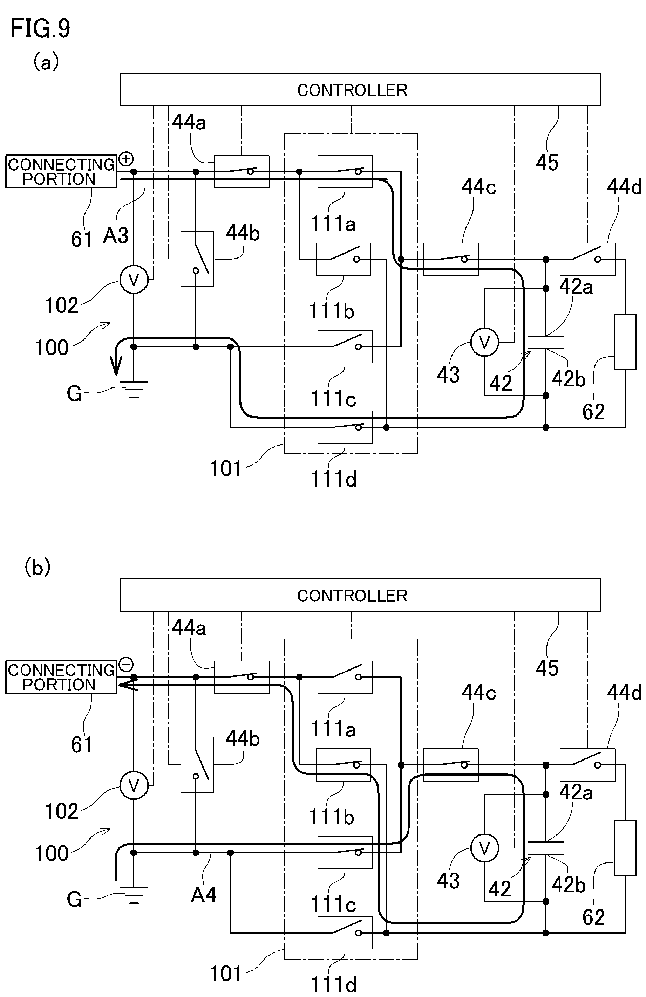

In the modification 3, when the voltage indicated by a signal output from the voltage detection circuit 43 is less than a predetermined voltage (i.e., when the capacitor 42 is not fully charged), the controller 45 turns on the switches 44a and 44c and turns off the switches 44b and 44d as shown in FIGs. 9(a) and 9(b).

When a signal output from the voltage detection circuit 102 indicates a positive electric potential, i.e., when a positive charge of static electricity is generated at the contact portion 61, the controller 45 turns on the switches 111a and 111d and turns off the switches 111b and 111c as shown in FIG. 9(a). By doing this, a current flows along a path (i.e., path indicated by an arrow A3 in FIG. 9(a)) passing through the contact portion 61, the switch 44a, the switch 111a, the switch 44c, the capacitor 42, the switch 111d, and the grounded portion G in this order. Because of this, static electricity generated at the contact portion 61 is removed, and the capacitor 42 is charged by using a charge of the static electricity generated at the contact portion 61.

Meanwhile, when a signal output from the voltage detection circuit 102 indicates a negative electric potential, i.e., when a negative charge of static electricity is generated at the contact portion 61, the controller 45 turns on the switches 111b and 111c and turns off the switches 111a and 111d as shown in FIG. 9(b). By doing this, a current flows along a path (i.e., path indicated by an arrow A4 in FIG. 9(b)) passing through the grounded portion G, the switch 111c, the switch 44c, the capacitor 42, the switch 111b, the switch 44a, the contact portion 61 in this order. Because of this, static electricity generated at the contact portion 61 is removed, and the capacitor 42 is charged by using a charge of the static electricity generated at the contact portion 61.

Also in the capacitor 42 of the modification 3, the first terminal 42a is higher in electric potential than the second terminal 42b irrespective of the polarity of static electricity generated at the contact portion 61.

In the embodiment above, the switches 44a to 44d are configured to be switched between the ON state and the OFF state under the control of the controller 45. However, the disclosure is not limited to this. For example, the charging unit 6 may include a circuit configured to switch at least one of the switches 44a to 44d between the ON state and the OFF state.

For example, the charging unit 6 may include an IC for charge control so that the charging unit 6 can switch the state of each of the switches 44a to 44d between the state shown in FIG. 4(a), the state shown in FIG. 4(b), and the state shown in FIG. 5(a) by using this IC, depending on whether the capacitor 42 is fully charged.

In the embodiment above, when the voltage indicated by a signal output from the voltage detection circuit 43 is not less than a predetermined voltage (i.e., when the capacitor 42 is fully charged), the contact portion 61 is connected to the grounded portion G so as to be grounded. However, the disclosure is not limited to this. When the voltage indicated by a signal output from the voltage detection circuit 43 is not less than a predetermined voltage, (i) the switches 44a and 44c may not be turned off and (ii) the contact portion 61 may not be grounded.

In the embodiment above, the spun yarn take-up winder 1 includes the winding detection unit 36 configured to detect the yarns Y being wound onto the contact roller 35. However, the spun yarn take-up winder 1 may not include the winding detection unit 36.

In the embodiment above, the contact portion 61 is formed of one of the godet rollers 11a to 11e, one of the guide rollers 13 and 14, one of the godet rollers 21 and 22, the contact roller 35, one of the fulcrum guides 31, or one of the traverse guides 32. However, the disclosure is not limited to this. For example, the spun yarn take-up winder 1 may include, as the contact portion 61, another member which is conductive and which is configured to make contact with the running yarns Y. In this case, the contact portion 61 may be formed of one of stationary guides different from the fulcrum guides 31.

In the embodiment above, the spun yarn take-up winder 1 includes the oil supply guide 10, and the contact portion 61 is a member provided downstream of the oil supply guide 10 in the running direction of the yarns Y. However, the disclosure is not limited to this. For example, as the contact portion 61, the spun yarn take-up winder 1 may include another member which is conductive, which is configured to make contact with the running yarns Y, and which is provided upstream of the oil supply guide 10 in the running direction of the yarns Y. Alternatively, the spun yarn take-up winder 1 may not include the oil supply guide 10.

In the embodiment above, the capacitor 42 is charged by using a charge of static electricity generated at the contact portion 61. However, the disclosure is not limited to this. For example, a battery may be provided instead of the capacitor 42 and the battery may be charged by using a charge of static electricity generated at the contact portion 61. In this case, the battery is equivalent to the power storage device of the present invention.

As described above, the present invention is used in the spun yarn take-up winder configured to form the packages by winding the running yarns Y. However, the disclosure is not limited to this. The present invention can be used in a yarn processing apparatus different from the spun yarn take-up winder.

As described above, the electric device forming the yarn processing apparatus is driven by electric charges stored in the capacitor, etc. included in the yarn processing apparatus. However, the disclosure is not limited to this.

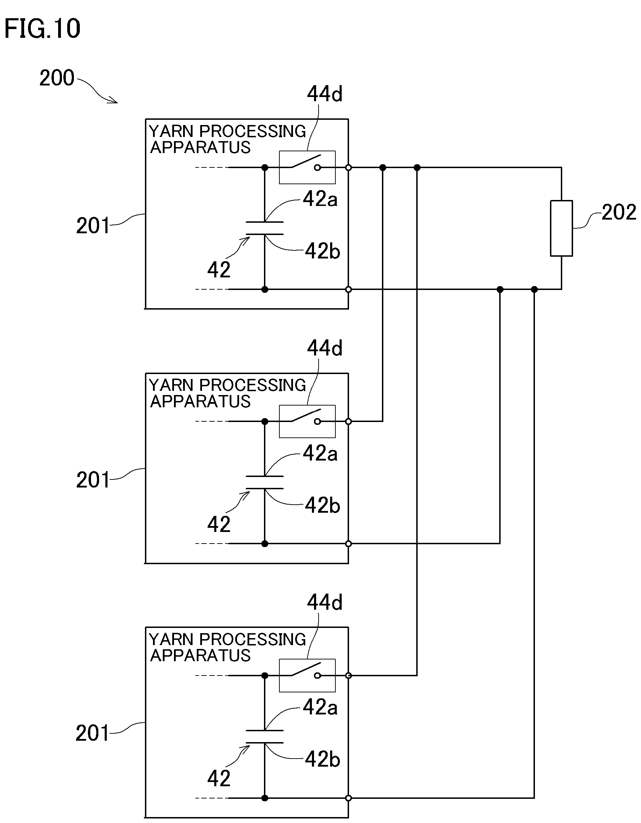

As shown in FIG. 10, a yarn processing system 200 of a modification 4 includes yarn processing apparatuses 201 and a single electric device 202. Each yarn processing apparatus 201 is equivalent to, e.g., the spun yarn take-up winder 1 of the embodiment above from which the electric device 62 is removed. For example, the yarn processing apparatuses 201 are provided in the same building. The yarn processing apparatuses 201 may be the same type or different types of apparatuses. FIG. 10 shows the yarn processing system 200 including three yarn processing apparatuses 201. However, the number of the yarn processing apparatuses 201 forming the yarn processing system 200 may be two or may be four or more. FIG. 10 does not illustrate the structure of each yarn processing apparatus 201, except the capacitor 42 and the switch 44d.

For example, the electric device 202 is provided in a building different from a building where each yarn processing apparatus 201 is provided. That is, the electric device 202 is different from a device forming each yarn processing apparatus 201.

In the yarn processing system 200, a first terminal 42a of a capacitor 42 of each yarn processing apparatus 201 is connected to one terminal of the electric device 202 through a switch 44d, and a second terminal 42b of the capacitor 42 of each yarn processing apparatus 201 is connected to the other terminal of the electric device 202. Assume that the capacitor 42 of each yarn processing apparatus 201 is charged. In this case, when a switch 44d of one yarn processing apparatus 201 is turned on, the electric device 202 is driven by electric charges stored in a capacitor 42 of the one yarn processing apparatus 201. That is, in the modification 4, the electric device 202 is driven by electric charges stored in capacitors 42 of the yarn processing apparatuses 201. In the modification 4, the switches 44d are equivalent to a switching unit of the present invention.

In the modification 4, while the switch 44d of each yarn processing apparatus 201 is turned off, the capacitor 42 of each yarn processing apparatus 201 is charged irrespective of the polarity of static electricity by using a charge of the static electricity in the same manner as described above. In this regard, the static electricity is generated at the contact portion because of the friction between the running yarns Y and the contact portion. A charge of static electricity generated at the contact portion is used to charge each capacitor 42. It is therefore possible to remove the static electricity generated at the contact portion.

In the modification 4, when the electric device 202 needs to be driven, the switch 44d is turned on while the capacitor 42 is charged. As a result, the electric device 202 is driven by electric charges stored in each capacitor 42.

In the modification 4, the single electric device 202 is driven by using electric charges stored in the capacitors 42 of the yarn processing apparatuses 201. Therefore, even when an amount of electric charges stored in a capacitor 42 of each yarn processing apparatus 201 is not large, the electric device 202 is driven as long as a total amount of electric charges stored in the capacitors 42 of the yarn processing apparatuses 201 is relatively large.

In the modification 4, the yarn processing system 200 includes the yarn processing apparatuses 201 and the single electric device 202, and the single electric device 202 is driven by electric charges stored in the capacitors 42 of the yarn processing apparatuses 201. However, the disclosure is not limited to this. In this regard, (i) the yarn processing system may be formed of a single yarn processing apparatus and a single electric device provided outside the yarn processing apparatus and (ii) the single electric device may be driven by electric charges stored in the capacitor 42 of the single yarn processing apparatus.

As described above, the switch 44d is connected between the first terminal 42a of the capacitor 42 and the electric device 62, 202. However, the disclosure is not limited to this. The switch 44d may be connected between the second terminal 42d of the capacitor 42 and the electric device 62, 202.

As described above, the electric device may be connected not only to the power storage device of the yarn processing apparatus but also to another power source such as a commercial power source. In this case, the electric device may be driven not only by electric charges stored in the power storage device of the yarn processing apparatus but also by electric charges supplied from the another power source. Furthermore, when enough electric charges are stored in the power storage device of the yarn processing apparatus, the electric device may be driven only by the electric charges stored in the power storage device. As such, when the electric device is driven by electric charges stored in the power storage device of the yarn processing apparatus and by electric charges supplied from the another power source described above, power consumption of the another power source described above is suppressed. Furthermore, the electric device is driven even in a case where electric charges are not sufficiently supplied to the electric device from the power storage device of the yarn processing apparatus.

## Claims

1. A yarn processing apparatus (1) comprising: at least one contact portion (61) which is conductive and which is configured to make contact with at least one running yarn (Y) ;
at least one power storage device (42) which includes a first terminal (42a) and a second terminal (42b) and which is able to be charged by a voltage applied between the first terminal (42a) and the second terminal (42b);
a voltage application circuit (41, 101) which is connected between the at least one contact portion (61) and the at least one power storage device (42) and which is configured to apply, by using a charge of static electricity generated because of friction between the at least one running yarn (Y) and the at least one contact portion (61), the voltage between the first terminal (42a) and the second terminal (42b) so that the first terminal (42a) is higher in electric potential than the second terminal (42b), irrespective of the polarity of the static electricity;
an electric device (62) connected to the at least one power storage device (42); and
a first switching unit (44d) which is connected between (i) any one of the first terminal (42a) and second terminal (42b) of the at least one power storage device (42)and (ii) the electric device (62), and which is configured to switch between connection of the at least one power storage device (41, 101) with the electric device (62) and disconnection of the at least one power storage device (41, 101) from the electric device (62).

2. The yarn processing apparatus (1) according to claim 1, wherein, the voltage application circuit is a fullwave rectifier circuit(41).

3. The yarn processing apparatus (1) according to claim 1 or 2, further comprising, as the at least one contact portion (61), a stationary guide (31) to which the at least one yarn (Y) is threaded and which is configured not to move in accordance with running of the at least one yarn (Y).

4. The yarn processing apparatus (1) according to any one of claims 1 to 3, further comprising a supplying roller (11a-11e, 13, 14, 21, 22) configured to convey yarns (Y) as the at least one contact portion (61).

5. The yarn processing apparatus (1) according to any one of claims 1 to 4, further comprising a winding unit (5) configured to form a package (P) by winding the at least one running yarn (Y) onto a bobbin (B), wherein,
the winding unit (5) includes:
a contact roller (35) configured to make contact with the at least one yarn (Y) on a surface of the unfinished package (P), as the at least one contact portion (61); and
a winding detection unit (36) configured to detect the at least one yarn (Y) being wound onto the contact roller (35).

6. The yarn processing apparatus (1) according to any one of claims 1 to 5, comprising a winding unit (5) configured to form a package (P) by winding the at least one running yarn (Y) onto a bobbin (B), wherein,
the winding unit (5) includes a traverse device (30) configured to traverse the at least one yarn (Y) in an axial direction of the bobbin (B) at the time of winding the at least one yarn (Y) onto the bobbin (B),
the traverse device (30) includes:
a moving guide (32) configured to reciprocate in the axial direction of the bobbin (B) while holding the at least one yarn (Y); and
a fulcrum guide (31) configured to support the at least one yarn (Y) on the upstream side of the moving guide (32) in a running direction of the at least one yarn (Y), and
the moving guide (32) is the at least one contact portion (61).

7. The yarn processing apparatus (1) according to any one of claims 1 to 6, comprising a winding unit (5) configured to form a package (P) by winding the at least one running yarn (Y) onto a bobbin (B), wherein,
the winding unit (5) includes a traverse device (30) configured to traverse the at least one yarn (Y) in an axial direction of the bobbin (B) at the time of winding the at least one yarn (Y) onto the bobbin (B),
the traverse device (30) includes:
a moving guide (32) configured to reciprocate in the axial direction of the bobbin (B) while holding the at least one yarn (Y); and
a fulcrum guide (31) configured to support the at least one yarn (Y) on the upstream side of the moving guide (32) in a running direction of the at least one yarn (Y), and
the fulcrum guide (31) is the at least one contact portion (61).

8. The yarn processing apparatus (1) according to any one of claims 1 to 7, further comprising an oil apply unit (10) which is provided upstream of the at least one contact portion (61) in the running direction of the at least one yarn (Y) and which is configured to apply oil to the at least one yarn (Y).

9. The yarn processing apparatus (1) according to any one of claims 1 to 8, further comprising: a second switching unit (44a-44c) configured to switch connection of the at least one contact portion (61) with the voltage application circuit (41, 101) and grounding of the at least one contact portion (61); and
a full charge detection unit (43) configured to detect whether the at least one power storage device (42) is fully charged, and
when the full charge detection unit (43) detects that the at least one power storage device (42) is not fully charged, the second switching unit (44a-44c) connects the at least one contact portion (61) to the voltage application circuit (41, 101), and
when the full charge detection unit (43) detects that the at least one power storage device (42) is fully charged, the second switching unit (44a-44c) grounds the at least one contact portion (61).

10. A yarn processing system (200) comprising at least one yarn processing apparatus (201) and an electric device (202) provided outside the at least one yarn processing apparatus (201),
the at least one yarn processing apparatus (201) including:
at least one contact portion (61) which is conductive and which is configured to make contact with a running yarn (Y);
at least one power storage device (42) which includes a first terminal (42a) and a second terminal (42b) and which is able to be charged by the voltage applied between the first terminal (42a) and the second terminal (42b);
a voltage application circuit (41, 101) which is connected between the at least one contact portion (61) and the at least one power storage device (42) and which is configured to apply, by using a charge of static electricity generated because of friction between the running yarn (Y) and the at least one contact portion (61), the voltage between the first terminal (42a) and the second terminal (42b) so that the first terminal (42a) is higher in electric potential than the second terminal (42b), irrespective of the polarity of the static electricity; and
a switching unit (44d) which is connected between (i) any one of the first terminal (42a) and second terminal (42b) of the at least one power storage device (42) and (ii) the electric device (202), and which is configured to switch connection of the at least one power storage device (42) with the electric device (202) and disconnection of the at least one power storage device (42) from the electric device (202).

11. The yarn processing system (200) according to claim 10, comprising: yarn processing apparatuses (201); and
the single electric device (202) connected to the yarn processing apparatuses (201).

## Patentansprüche

1. Garnverarbeitungsvorrichtung (1), umfassend: mindestens einen Kontaktabschnitt (61), der leitend ist, und der so konfiguriert ist, dass er Kontakt mit mindestens einem laufenden Garn (Y) herstellt;
mindestens eine Leistungsspeichereinrichtung (42), die eine erste Klemme (42a) und eine zweite Klemme (42b) einschließt, und die fähig ist, durch eine Spannung geladen zu werden, die zwischen der ersten Klemme (42a) und der zweiten Klemme (42b) angelegt wird;
eine Spannungsanlegungsschaltung (41, 101), die zwischen dem mindestens einen Kontaktabschnitt (61) und der mindestens einen Leistungsspeichereinrichtung (42) verbunden ist, und die so konfiguriert ist, dass sie durch Verwenden einer Ladung statischer Elektrizität, die infolge von Reibung zwischen dem mindestens einen laufenden Garn (Y) und dem mindestens einen Kontaktabschnitt (61) erzeugt wird, die Spannung zwischen der ersten Klemme (42a) und der zweiten Klemme (42b) so anlegt, dass die erste Klemme (42a) unabhängig von der Polarität der statischen Elektrizität im elektrischen Potenzial höher ist als die zweite Klemme (42b);
eine elektrische Einrichtung (62), die mit der mindestens einen Leistungsspeichereinrichtung (42) verbunden ist; und
eine erste Umschalteinheit (44d), die verbunden ist zwischen (i) einer der ersten Klemme (42a) und zweiten Klemme (42b) der mindestens einen Leistungsspeichereinrichtung (42) und (ii) der elektrischen Einrichtung (62), und die so konfiguriert ist, dass sie zwischen Verbindung der mindestens einen Leistungsspeichereinrichtung (41, 101) mit der elektrischen Einrichtung (62) und Trennung der mindestens einen Leistungsspeichereinrichtung (41, 101) von der elektrischen Einrichtung (62) umschaltet.

2. Garnverarbeitungsvorrichtung (1) nach Anspruch 1, wobei die Spannungsanlegungsschaltung eine Vollweggleichrichterschaltung (41) ist.

3. Garnverarbeitungsvorrichtung (1) nach Anspruch 1 oder 2, weiter umfassend, als den mindestens einen Kontaktabschnitt (61), eine stationäre Führung (31), in die das mindestens eine Garn (Y) eingefädelt ist, und die so konfiguriert ist, dass sie sich nicht gemäß dem Lauf des mindestens einen Garns (Y) bewegt.

4. Garnverarbeitungsvorrichtung (1) nach einem der Ansprüche 1 bis 3, weiter umfassend eine Zuführrolle (11a-11e, 13, 14, 21, 22), die so konfiguriert ist, dass sie Garne (Y) als den mindestens einen Kontaktabschnitt (61) befördert.

5. Garnverarbeitungsvorrichtung (1) nach einem der Ansprüche 1 bis 4, weiter umfassend eine Aufwickeleinheit (5), die so konfiguriert ist, dass sie durch Aufwickeln des mindestens einen laufenden Garns (Y) auf einer Spule (B) ein Paket (P) bildet, wobei,
die Aufwickeleinheit (5) Folgendes einschließt:
eine Kontaktrolle (35), die so konfiguriert ist, dass sie Kontakt mit dem mindestens einen Garn (Y) auf einer Oberfläche des unfertigen Pakets (P) als den mindestens einen Kontaktabschnitt (61) herstellt; und
eine Aufwickelerkennungseinheit (36), die so konfiguriert ist, dass sie das mindestens eine Garn (Y), das auf der Kontaktrolle (35) aufgewickelt wird, erkennt.

6. Garnverarbeitungsvorrichtung (1) nach einem der Ansprüche 1 bis 5, umfassend eine Aufwickeleinheit (5), die so konfiguriert ist, dass sie durch Aufwickeln des mindestens einen laufenden Garns (Y) auf einer Spule (B) ein Paket (P) bildet, wobei
die Aufwickeleinheit (5) eine Traversiereinrichtung (30) einschließt, die so konfiguriert ist, dass das mindestens eine Garn (Y) in einer axialen Richtung der Spule (B) zur Zeit des Aufwickelns des mindestens einen Garns (Y) auf der Spule (B) traversiert,
wobei die Traversiereinrichtung (30) Folgendes einschließt:
eine sich bewegende Führung (32), die so konfiguriert ist, dass sie sich in der axialen Richtung der Spule (B) hin- und herbewegt, während sie das mindestens eine Garn (Y) hält; und
eine Drehpunktführung (31), die so konfiguriert ist, dass sie das mindestens eine Garn (Y) auf der stromaufwärtigen Seite der sich bewegenden Führung (32) in einer Laufrichtung des mindestens einen Garns (Y) stützt, und
wobei die sich bewegende Führung (32) der mindestens eine Kontaktabschnitt (61) ist.

7. Garnverarbeitungsvorrichtung (1) nach einem der Ansprüche 1 bis 6, umfassend eine Aufwickeleinheit (5), die so konfiguriert ist, dass sie durch Aufwickeln des mindestens einen laufenden Garns (Y) auf einer Spule (B) ein Paket (P) bildet, wobei
die Aufwickeleinheit (5) eine Traversiereinrichtung (30) einschließt, die so konfiguriert ist, dass das mindestens eine Garn (Y) in einer axialen Richtung der Spule (B) zur Zeit des Aufwickelns des mindestens einen Garns (Y) auf der Spule (B) traversiert,
wobei die Traversiereinrichtung (30) Folgendes einschließt:
eine sich bewegende Führung (32), die so konfiguriert ist, dass sie sich in der axialen Richtung der Spule (B) hin- und herbewegt, während sie das mindestens eine Garn (Y) hält; und
eine Drehpunktführung (31), die so konfiguriert ist, dass sie das mindestens eine Garn (Y) auf der stromaufwärtigen Seite der sich bewegenden Führung (32) in einer Laufrichtung des mindestens einen Garns (Y) stützt, und
die Drehpunktführung (31) der mindestens eine Kontaktabschnitt (61) ist.

8. Garnverarbeitungsvorrichtung (1) nach einem der Ansprüche 1 bis 7, weiter umfassend eine Ölanwendungseinheit (10), die stromaufwärts von dem mindestens einen Kontaktabschnitt (61) in der Laufrichtung des mindestens einen Garns (Y) bereitgestellt ist, und die so konfiguriert ist, dass sie Öl auf das mindestens eine Garn (Y) anwendet.

9. Garnverarbeitungsvorrichtung (1) nach einem der Ansprüche 1 bis 8, weiter umfassend: eine zweite Umschalteinheit (44a-44c), die so konfiguriert ist, dass sie zwischen Verbinden des mindestens einen Kontaktabschnitts (61) mit der Spannungsanlegungsschaltung (41, 101) und Erden des mindestens einen Kontaktabschnitts (61) umschaltet; und
eine Erkennungseinheit (43) von voller Ladung, die so konfiguriert ist, dass sie erkennt, ob die mindestens eine Leistungsspeichereinrichtung (42) voll geladen ist, und
wenn die Erkennungseinheit (43) von voller Ladung erkennt, dass die mindestens eine Leistungsspeichereinrichtung (42) nicht voll geladen ist, die zweite Umschalteinheit (44a-44c) den mindestens einen Kontaktabschnitt (61) mit der Spannungsanlegungsschaltung (41, 101) verbindet, und
wenn die Erkennungseinheit (43) von voller Ladung erkennt, dass die mindestens eine Leistungsspeichereinrichtung (42) voll geladen ist, die zweite Umschalteinheit (44a-44c) den mindestens einen Kontaktabschnitt (61) erdet.

10. Garnverarbeitungssystem (200), umfassend mindestens eine Garnverarbeitungsvorrichtung (201) und eine elektrische Einrichtung (202), die außerhalb der mindestens einen Garnverarbeitungsvorrichtung (201) bereitgestellt ist,
wobei die mindestens eine Garnverarbeitungsvorrichtung (201) Folgendes einschließt:
mindestens einen Kontaktabschnitt (61), der leitend ist und der so konfiguriert ist, dass er Kontakt mit einem laufenden Garn (Y) herstellt;
mindestens eine Leistungsspeichereinrichtung (42), die eine erste Klemme (42a) und eine zweite Klemme (42b) einschließt, und die fähig ist, durch die Spannung geladen zu werden, die zwischen der ersten Klemme (42a) und der zweiten Klemme (42b) angelegt wird;
eine Spannungsanlegungsschaltung (41, 101), die zwischen dem mindestens einen Kontaktabschnitt (61) und der mindestens einen Leistungsspeichereinrichtung (42) verbunden ist, und die so konfiguriert ist, dass sie durch Verwenden einer Ladung statischer Elektrizität, die infolge von Reibung zwischen dem einen laufenden Garn (Y) und dem mindestens einen Kontaktabschnitt (61) erzeugt wird, die Spannung zwischen der ersten Klemme (42a) und der zweiten Klemme (42b) so anlegt, dass die erste Klemme (42a) unabhängig von der Polarität der statischen Elektrizität im elektrischen Potenzial höher ist als die zweite Klemme (42b); und
eine Umschalteinheit (44d), die verbunden ist zwischen (i) einer der ersten Klemme (42a) und zweiten Klemme (42b) der mindestens einen Leistungsspeichereinrichtung (42) und (ii) der elektrischen Einrichtung (202), und die so konfiguriert ist, dass sie zwischen Verbindung der mindestens einen Leistungsspeichereinrichtung (42) mit der elektrischen Einrichtung (202) und Trennung der mindestens einen Leistungsspeichereinrichtung (42) von der elektrischen Einrichtung (202) umschaltet.

11. Garnverarbeitungssystem (200) nach Anspruch 10, umfassend: Garnverarbeitungsvorrichtungen (201); und
die einzige elektrische Einrichtung (202), die mit den Garnverarbeitungsvorrichtungen (201) verbunden ist.

## Revendications

1. Appareil (1) de traitement de fil comprenant : au moins une partie de contact (61) qui est conductrice et qui est configurée pour faire contact avec au moins un fil en défilement (Y) ;
au moins un dispositif (42) de stockage de puissance qui inclut une première borne (42a) et une seconde borne (42b) et qui est apte à être chargé par une tension appliquée entre la première borne (42a) et la seconde borne (42b) ;
un circuit (41, 101) d'application de tension qui est connecté entre ladite au moins une partie de contact (61) et ledit au moins un dispositif (42) de stockage de puissance et qui est configuré pour appliquer, en utilisant une charge d'électricité statique générée par le fait d'un frottement entre ledit au moins un fil en défilement (Y) et ladite au moins une partie de contact (61), la tension entre la première borne (42a) et la seconde borne (42b), de sorte que la première borne (42a) présente un potentiel électrique supérieur à la seconde borne (42b), indépendamment de la polarité de l'électricité statique ;
un dispositif électrique (62) connecté audit au moins un dispositif (42) de stockage de puissance ; et
une première unité de commutation (44d) qui est connectée entre (i) l'une quelconque parmi la première borne (42a) et la seconde borne (42b) dudit au moins un dispositif (42) de stockage de puissance et (ii) le dispositif électrique (62), et qui est configurée pour commuter entre une connexion dudit au moins un dispositif de stockage de puissance (41, 101) avec le dispositif électrique (62) et une déconnexion dudit au moins un dispositif de stockage de puissance (41, 101) du dispositif électrique (62).

2. Appareil (1) de traitement de fil selon la revendication 1, dans lequel, le circuit d'application de tension est un circuit redresseur pleine onde (41).

3. Appareil (1) de traitement de fil selon la revendication 1 ou la revendication 2, comprenant en outre, en tant que ladite au moins une partie de contact (61), un guide fixe (31) sur lequel ledit au moins un fil (Y) est enfilé et qui est configuré pour ne pas se déplacer selon un défilement dudit au moins un fil (Y).

4. Appareil (1) de traitement de fil selon l'une quelconque des revendications 1 à 3, comprenant en outre un rouleau d'alimentation (11a-11e, 13, 14, 21, 22) configuré pour acheminer des fils (Y) en tant que ladite au moins une partie de contact (61).

5. Appareil (1) de traitement de fil selon l'une quelconque des revendications 1 à 4, comprenant en outre une unité d'enroulement (5) configurée pour former un paquet (P) par enroulement dudit au moins un fil en défilement (Y) sur une bobine (B), dans lequel,
l'unité d'enroulement (5) inclut :
un rouleau de contact (35) configuré pour faire contact avec ledit au moins un fil (Y) sur une surface du paquet non fini (P), en tant que ladite au moins une partie de contact (61) ; et
une unité de détection d'enroulement (36) configurée pour détecter le fait que ledit au moins un fil (Y) est enroulé sur le rouleau de contact (35).

6. Appareil (1) de traitement de fil selon l'une quelconque des revendications 1 à 5, comprenant une unité d'enroulement (5) configurée pour former un paquet (P) par enroulement dudit au moins un fil en défilement (Y) sur une bobine (B), dans lequel,
l'unité d'enroulement (5) inclut un dispositif de va-et-vient (30) configuré pour déplacer en va-et-vient ledit au moins un fil (Y) dans une direction axiale de la bobine (B) au moment de l'enroulement dudit au moins un fil (Y) sur la bobine (B),
le dispositif de va-et-vient (30) inclut :
un guide mobile (32) configuré pour effectuer un mouvement de va-et-vient dans la direction axiale de la bobine (B) tout en maintenant ledit au moins un fil (Y) ; et
un guide articulé (31) configuré pour supporter ledit au moins un fil (Y) sur le côté amont du guide mobile (32) dans une direction de défilement dudit au moins un fil (Y), et
le guide mobile (32) est ladite au moins une partie de contact (61).

7. Appareil (1) de traitement de fil selon l'une quelconque des revendications 1 à 6, comprenant une unité d'enroulement (5) configurée pour former un paquet (P) par enroulement dudit au moins un fil en défilement (Y) sur une bobine (B), dans lequel,
l'unité d'enroulement (5) inclut un dispositif de va-et-vient (30) configuré pour déplacer en va-et-vient ledit au moins un fil (Y) dans une direction axiale de la bobine (B) au moment de l'enroulement dudit au moins un fil (Y) sur la bobine (B),
le dispositif de va-et-vient (30) inclut :
un guide mobile (32) configuré pour effectuer un mouvement de va-et-vient dans la direction axiale de la bobine (B) tout en maintenant ledit au moins un fil (Y) ; et
un guide articulé (31) configuré pour supporter ledit au moins un fil (Y) sur le côté amont du guide mobile (32) dans une direction de défilement dudit au moins un fil (Y), et
le guide articulé (31) est ladite au moins une partie de contact (61).

8. Appareil (1) de traitement de fil selon l'une quelconque des revendications 1 à 7, comprenant en outre une unité d'application d'huile (10) qui est prévue en amont de ladite au moins une partie de contact (61) dans la direction de défilement dudit au moins un fil (Y) et qui est configurée pour appliquer de l'huile sur ledit au moins un fil (Y).

9. Appareil (1) de traitement de fil selon l'une quelconque des revendications 1 à 8, comprenant en outre : une seconde unité de commutation (44a-44c) configurée pour commuter entre une connexion de ladite au moins une partie de contact (61) avec le circuit (41, 101) d'application de tension et une mise à la terre de ladite au moins une partie de contact (61) ; et
une unité de détection de pleine charge (43) configurée pour détecter si ledit au moins un dispositif (42) de stockage de puissance est pleinement chargé, et
lorsque l'unité de détection de pleine charge (43) détecte que ledit au moins un dispositif (42) de stockage de puissance n'est pas pleinement chargé, la seconde unité de commutation (44a-44c) connecte ladite au moins une partie de contact (61) au circuit (41, 101) d'application de tension, et
lorsque l'unité de détection de pleine charge (43) détecte que ledit au moins un dispositif (42) de stockage de puissance est pleinement chargé, la seconde unité de commutation (44a-44c) met à la terre ladite au moins une partie de contact (61).

10. Système (200) de traitement de fil comprenant au moins un appareil (201) de traitement de fil et un dispositif électrique (202) prévu à l'extérieur dudit au moins un appareil (201) de traitement de fil,
ledit au moins un appareil (201) de traitement de fil incluant :
au moins une partie de contact (61), qui est conductrice et qui est configurée pour faire contact avec un fil en défilement (Y) ;
au moins un dispositif (42) de stockage de puissance, qui inclut une première borne (42a) et une seconde borne (42b) et qui est apte à être chargé par la tension appliquée entre la première borne (42a) et la seconde borne (42b) ;
un circuit (41, 101) d'application de tension qui est connecté entre ladite au moins une partie de contact (61) et ledit au moins un dispositif (42) de stockage de puissance et qui est configuré pour appliquer, en utilisant une charge d'électricité statique générée par le fait d'un frottement entre le fil en défilement (Y) et ladite au moins une partie de contact (61), la tension entre la première borne (42a) et la seconde borne (42b) de sorte que la première borne (42a) présente un potentiel électrique supérieur à la seconde borne (42b), indépendamment de la polarité de l'électricité statique ; et
une unité de commutation (44d), qui est connectée entre (i) l'une quelconque parmi la première borne (42a) et la seconde borne (42b) dudit au moins un dispositif (42) de stockage de puissance, et (ii) le dispositif électrique (202), et qui est configurée pour commuter entre une connexion dudit au moins un dispositif (42) de stockage de puissance avec le dispositif électrique (202) et une déconnexion dudit au moins un dispositif (42) de stockage de puissance du dispositif électrique (202).

11. Système de traitement de fil (200) selon la revendication 10, comprenant : des appareils de traitement de fil (201) ; et
l'unique dispositif électrique (202) connecté aux appareils de traitement de fil (201).
